(19)

Europäisches
Patentamt

European
Patent Office

Office européen
des brevets

(11) **EP 2 525 507 A1**

(12) **EUROPEAN PATENT APPLICATION**
published in accordance with Art. 153(4) EPC

(43) Date of publication:
**21.11.2012 Bulletin 2012/47**

(51) Int Cl.:
***H04B 7/04*** (2006.01)

(21) Application number: **10842829.3**

(22) Date of filing: **13.01.2010**

(86) International application number:
**PCT/CN2010/070151**

(87) International publication number:
**WO 2011/085545 (21.07.2011 Gazette 2011/29)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Alcatel Lucent
75007 Paris (FR)**

(72) Inventors:
• **CHEN, Jinhui
Shanghai 201206 (CN)**

• **LI, Dong
Shanghai 201206 (CN)**

(74) Representative: **Dreiss
Patentanwälte
Gerokstrasse 1
70188 Stuttgart (DE)**

(54) **METHOD AND DEVICE FOR GENERATING FEEDBACK CODEBOOK IN NETWORK EQUIPMENT**

(57)     The invention provides a method of generating a 2M-antenna feedback codebook for $l$ data streams in a network device, wherein $l$=1,..., 2M. The method includes the steps of: acquiring an M-antenna feedback codebook $W_{M,M}$ for M data streams; generating a 2M-antenna feedback codebook for 2M data streams based upon the M-antenna feedback codebook for the M data streams; and determining a 2M-antenna feedback codebook for $l$ data streams according to the generated 2M-antenna feedback codebook for the 2M data streams.

S2 1

Acquire a four-antenna feedback codebook for four data streams

S2 2

Generate an eight-antenna feedback codebook for eight data streams based upon the M-antenna feedback codebook for the four data streams

S2 3

Determine an eight-antenna feedback codebook for $l$ data streams according to the generated eight-antenna feedback codebook for the 2M data streams

FIG. 2

EP 2 525 507 A1

## Description

### Field of the invention

The present disclosure relates to a feedback codebook and particularly to a method and apparatus for generating a feedback codebook in a network device

### Background of the invention

As commonly agreed among the communication industry in the discussion about LTE-Advanced, to realize eight-antenna transmission in the downlink so as to achieve significant downlink spectrum efficiency, an eight-antenna feedback codebook has to be provided for an FDD system. But the only codebook in the existing standard is a four-antenna feedback codebook in LTE Release 8. Samsung Corp. and other corporations have made some attempts, but their proposed codebooks suffer from poor compatibility with the existing codebook.

Therefore it is particularly desired to provide an eight-antenna codebook that is well compatible with the existing four-antenna feedback codebook.

### Summary of the invention

According to an embodiment of the invention, there is provided a method of generating a 2M-antenna feedback codebook for $l$ data streams in a network device, wherein $l=1,...,2M$, and the method includes the steps of: acquiring an M-antenna feedback codebook $W_{M,M}$ for M data streams, wherein the $i^{th}$ codeword is denoted as $W_{M,M,i}$, wherein $i=0,..., K\text{-}1$, and $K$ is the number of codewords in $W_{M,M}$; generating a 2M-antenna feedback codebook for 2M data streams based upon the M-antenna feedback codebook for the M data streams, wherein the $(4i+j)^{th}$ codeword is defined in the

equation of:    $$W_{2M,2M,4i+j} = \begin{pmatrix} W_{M,M,i} & W_{M,M,i} \\ W_{M,M,j} & -W_{M,M,j} \end{pmatrix},$$    wherein $i=0,..., K\text{-}1$, and $j=0,..., K\text{-}1$; and

determining a 2M-antenna feedback codebook for $l$ data streams according to the generated 2M-antenna feedback codebook for the 2M data streams, wherein the $(4i+j)^{th}$ codeword $W_{2M,1,4i+j}$ is composed of the first $l$ columns of $W_{2M, 2M, 4i+j}$.

Particularly the acquired 2M-antenna feedback codebook correspondingly includes 2K codewords.

Furthermore the codewords in the M-antenna feedback codebook $W_{M,M}$ are embeddable.

Furthermore in this embodiment, an eight-antenna feedback codebook is generated from a four-antenna feedback codebook.

According to another embodiment of the invention, there is provided a method of generating a 2M-antenna feedback codebook for $l$ data streams in a network device, wherein $l=1,...,M$, and the method includes the steps of: acquiring an M-antenna feedback codebook $W_{M,l}$ for $l$ data streams, wherein the $i^{th}$ codeword is denoted as $W_{M,l,i}$, wherein $i=0,...,K\text{-}1$, and $K$ is the number of codewords in $W_{M,l}$; and generating a 2M-antenna feedback codebook for the $l$ data streams based upon the M-antenna feedback codebook for the $l$ data streams, wherein the $(4i+j)^{th}$ codeword is defined in the equation of:    $$W_{2M,l,4i+j} = \begin{pmatrix} W_{M,l,i} \\ W_{M,l,j} \end{pmatrix},$$    wherein $i=0,..., K\text{-}1$, and $j=0,..., K\text{-}1$.

Particularly the acquired 2M-antenna feedback codebook correspondingly includes 2K codewords.

Furthermore in this embodiment, an eight-antenna feedback codebook is generated from a four-antenna feedback codebook.

According to a further embodiment of the invention, there is provided a first apparatus for generating a 2M-antenna feedback codebook for $l$ data streams in a network device, wherein $l=1,...,2M$, and the first apparatus includes: a first unit for acquiring an M-antenna feedback codebook $W_{M,M}$ for M data streams, wherein the $i^{th}$ codeword is denoted as $W_{M,M,i}$, wherein $i=0,...,K\text{-}1$, and $K$ is the number of codewords in $W_{M,M}$; and a second unit for generating a 2M-antenna feedback codebook for 2M data streams based upon the M-antenna feedback codebook for the M data streams, wherein

the $(4i+j)^{th}$ codeword is defined in the equation of: $W_{2M,2M,4i+j} = \begin{pmatrix} W_{M,M,i} & W_{M,M,i} \\ W_{M,M,j} & -W_{M,M,j} \end{pmatrix}$, wherein $i=0,...,$ $K$-1, and $j = 0,...,$ $K$-1; and the second unit is further for determining a 2M-antenna feedback codebook for $l$ data streams according to the generated 2M-antenna feedback codebook for the 2M data streams, wherein the $(4i+j)^{th}$ codeword $W_{2M,1,4i+j}$ is composed of the first $l$ columns of $W_{2M, 2M, 4i+j}$.

Particularly the acquired 2M-antenna feedback codebook correspondingly includes 2K codewords.

Furthermore the codewords in the M-antenna feedback codebook $W_{M,M}$ are embeddable.

Furthermore in this embodiment, an eight-antenna feedback codebook is generated from a four-antenna feedback codebook.

According to a further embodiment of the invention, there is provided a second apparatus for generating a 2M-antenna feedback codebook of $l$ data streams in a network device, wherein $l=1,...,M$, and the second apparatus includes the steps of: a third unit for acquiring an M-antenna feedback codebook $W_{M,l}$ for $l$ data streams, wherein the $i^{th}$ codeword is denoted as $W_{M,l,i}$, wherein $i=0,...,K-1$, and $K$ is the number of codewords in $W_{M,l}$; and a fourth unit for generating a 2M-antenna feedback codebook for the $l$ data streams based upon the M-antenna feedback codebook for the $l$ data streams,

wherein the $(4i+j)^{th}$ codeword is defined in the equation of: $W_{2M,l,4i+j} = \begin{pmatrix} W_{M,l,i} \\ W_{M,l,j} \end{pmatrix}$, wherein $i=0,...,$ $K$-1, and $j=0,...,$ $K$-1.

Particularly the acquired 2M-antenna feedback codebook correspondingly includes 2K codewords.

Furthermore in this embodiment, an eight-antenna feedback codebook is generated from a four-antenna feedback codebook.

With the method and the apparatus according to the invention, a 2M-antenna feedback codebook can be generated from an existing M-antenna feedback codebook conveniently at a network device, e.g., a base station, a mobile terminal, etc., thereby achieving good compatibility with the prior art.

**Brief description of drawings**

Other features, objects and advantages of the invention will become more apparent upon reading the detailed description of non-limiting embodiments taken in conjunction with the drawings in which:

Fig.1 is a typical application scenario of a method and an apparatus according to the invention;

Fig.2 is a flow chart of a method of generating a 2M-antenna feedback codebook for $l$ data streams in a network device according to a first embodiment of the invention, where $l=1,...,$ 2M;

Fig.3 is a flow chart of a method of generating a 2M-antenna feedback codebook for $l$ data streams in a network device according to a second embodiment of the invention, where $l=1,..., M$;

Fig.4 is a block diagram of a first apparatus for generating a 2M-antenna feedback codebook for $l$ data streams in a network device according to an embodiment of the invention, where $l=1,..., 2M$;

Fig. 5 is a block diagram of a second apparatus for generating a 2M-antenna feedback codebook for $l$ data streams in a network device according to a further embodiment of the invention, where $l=1,..., M$; and

Fig.6a to Fig.6f illustrate simulation results with use of the 2M-antenna feedback codebook according to the invention.

Identical or like reference numerals in the drawings represent identical or like step features or means (modules) features.

**Detailed description of embodiments**

A plurality of non-limiting embodiments of the invention will be described below with reference to the drawings. Those skilled in the art can appreciate that these non-limiting embodiments are merely intended to help understanding of the inventive solution but not to limit in any way the scope of the invention as defined in the appended claims. For example the invention will not be limited to an illustrative example to be introduced later where an eight-antenna feedback codebook is generated from a four-antenna feedback codebook, but in fact, the invention can be applicable to a scenario where a 2M-antenna feedback codebook is generated from any M-antenna feedback codebook, and this wide applicability will be well supported below.

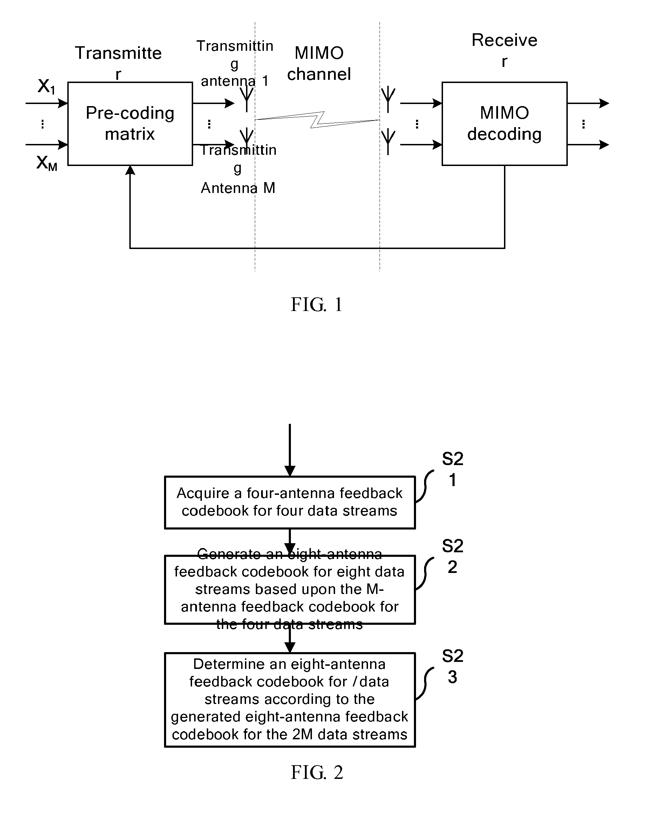

It shall be appreciated that a method and an apparatus to be introduced later will be applicable not only to a situation where there is a single data stream but also to a situation where there is more than one data stream. Particularly in the following first embodiment, the number of data streams is up to the number of transmission antennas in a network device. Furthermore the situation where there are a plurality of data streams as discussed in respective embodiments of the invention include a situation where a single receiver corresponds to a plurality of data streams and a situation where a plurality of receivers correspond to a plurality of data streams. And since the number of receivers has no substantial influence upon the essence of the invention, the following discussion will not be made respectively for different numbers of receivers but only for the situation where a single receiver corresponds to a plurality of data streams, and this typical application scenario will also be referred to single-user MIMO (Multiple Input Multiple Output) as illustrated in Fig.1.

In Fig.1, M symbol streams $X_1$ to $X_M$ are transmitted respectively over M transmission antennas, i.e., a transmission antenna 1 to a transmission antenna M, after the pre-coding process and other necessary processes, and a receiver recovers original information bits in a process corresponding to that at a transmitter upon reception of M signals corresponding to the M data streams.

The number of antennas illustrated in Fig.1 is 2M instead of M, and a feedback codebook can be generated in a manner according to the following embodiments and used in existing and future technical solutions. Particularly since a 2M-antenna feedback codebook generated in the respective embodiments of the invention is generated from an existing M-antenna feedback codebook, they can be substantially compatible with the existing technical solution to the use of the feedback codebook

First Embodiment

Reference is made to Fig.2 illustrating a flow chart of a method of generating an eight-antenna feedback codebook for *I* data streams in a network device, where *I*=1,..., 8, that is, a situation where there is a single data stream to a full-load situation where eight data streams are borne over eight antennas in the downlink channel have been covered.

For example, this network device is typically an eNodeB (i.e., a base station) or a mobile terminal in LTE-A because they are devices in a mobile communication network for which a feedback codebook is typically used. However the invention will not preclude the possibility of the network device being other devices than a base station and a mobile terminal. For example, if a feedback codebook generated in the embodiment of the invention has a considerable period of lifetime or valid time in practical use, then the network device of the invention can be a computing device capable of performing a process of generation of a feedback codebook according to the invention and capable of providing a base station, a mobile terminal, etc., with the generated feedback codebook directly or indirectly.

Hereinafter the foregoing network device will be a base station without loss of generality, and those skilled in the art can appreciate that a corresponding mobile terminal can also generate a feedback codebook or passively receive such a feedback codebook in order to process downlink communication correctly.

The method illustrated in Fig.2 starts with the step S21 where the foregoing parameter M takes the value of 4, for example, and the base station acquires a four-antenna feedback codebook $W_4$, for four data streams, where the first subscript 4 in $W_{4,4}$ identifies the codebook as a four-antenna feedback codebook, and the second subscript 4 identifies the codebook as being used for four data streams. Furthermore the i$^{th}$ codeword in the codebook $W_{4,4}$ is denoted as $W_{4,4,i}$, where $i$=0,..., $K$-1 and $K$ is the number of codewords in $W_{4,4}$, typically an integer power of 2 at present, e.g., 32, 64, etc. $K$ is typically set as a result of the tradeoff between the integrity and the size of the codebook. On one hand, more codewords in a codebook, more likely for a specific one to have the best effect of pre-coding; on the other hand, more codewords in a codebook, more bits are required for a mobile terminal to indicate to a base station a specific codeword it selects, and for example, the required number of bits is 5 when K=32.

Unless stated, otherwise in this context, for a codeword in the form of $W_{a,b,c}$, "a" represents the number of transmission antennas corresponding to a feedback codebook where the codeword resides, e.g., 4, 8, etc.; "b" represents the number of data streams corresponding to the feedback codebook where the codeword resides; and "c" represents the serial number of the codeword in the feedback codebook.

The step S21 can be performed by the base station invoking a pre-stored four-antenna feedback codebook $W_{4,4}$ for four data streams or importing $W_{4,4}$ from the outside via a communication interface.

In the next step S22, the base station generates an eight-antenna feedback codebook for eight data streams based upon the four-antenna feedback codebook $W_{4,4}$ for the four data streams, where the $(4i+j)^{th}$ codeword is defined in the equation (1) of:

$$W_{8,8,4i+j} = \begin{pmatrix} W_{4,4,i} & W_{4,4,i} \\ W_{4,4,j} & -W_{4,4,j} \end{pmatrix},$$ where $i=0,..., K\text{-}1$ and $j=0,..., K\text{-}1$ (1)

Where $-W_{4,4,j}$ in $\begin{pmatrix} W_{4,4,i} & W_{4,4,i} \\ W_{4,4,j} & -W_{4,4,j} \end{pmatrix}$ is used to make $W_{8,8,4i+j}$ be a full-rank matrix. The parameter $i$

($j$) identifies $W_{4,4,i}$ ($W_{4,4,j}$) as the $i(j)^{th}$ codeword in $W_{4,4}$, and $4i+j$ further identifies uniquely $W_{8,8,4i+j}$ as the $(4i+j)^{th}$ codeword in the generated eight-antenna feedback codebook $W_{8,8}$ for the eight data streams. Wherein the number of codewords in $W_{8,8}$ is 2K.

As mentioned previously an eight-antenna feedback codebook for one to eight data streams can be generated by the method according to this embodiment, and if an eight-antenna feedback codebook for eight data streams is to be generated dependent upon a specific need in practice, then the purpose has been achieved, and thus the step S23 can be construed as a step of taking the result of operation in the step S22 as a codebook to be generated finally. That is, $W_{8,8}$ generated in the step S22 is taken as a final result, where each codeword is composed of the first eight columns, i.e., all the columns in $W_{8,8,4i+j}$.

In a variation, if an eight-antenna feedback codebook for six data streams is to be generated, then the base station determines a codebook $W_{8,6}$ including 2K codewords according to $W_{8,8}$ in the step 23, where each codeword $W_{8,6,4i+j}$ is composed of the first six columns in $W_{8,8,4i+j}$.

In a variation, if an eight-antenna feedback codebook for two data streams is to be generated, then the base station determines a codebook $W_{8,2}$ including 2K codewords according to $W_{8,8}$ in the step 23, where each codeword $W_{8,2,4i+j}$ is composed of the first two columns in $W_{8,8,4i+j}$.

Other examples of the number of data streams represented by the parameter $l$ can be directly determined unambiguously for the foregoing respective situations and will not be enumerated in this context.

Second Embodiment

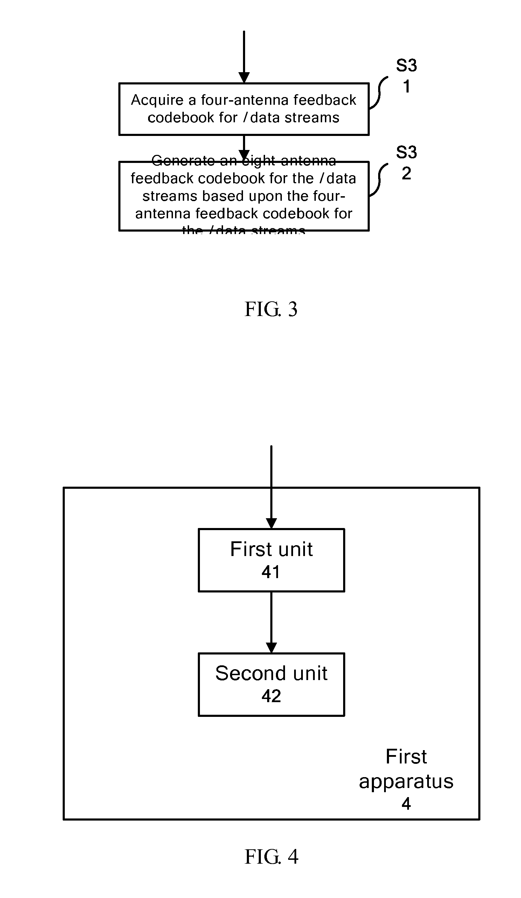

Reference is made to Fig.3 illustrating a flow chart of a method of generating an eight-antenna feedback codebook for $l$ data streams in a network device according to a second embodiment of the invention, where $l=1,..., 4$,

This method starts with the step S31 performed similarly to the step 21, for example, where the base station can invoke a pre-stored four-antenna feedback codebook $W_{4,l}$ for $l$ data streams or importing $W_{4,l}$ from the outside via a communication interface.

In the step S31, the base station generates an eight-antenna feedback codebook for the $l$ data streams according to $W_{4,l}$ in full combination, where the $(4i+j)^{th}$ codeword is defined in the equation (2), and the number of data streams in the second embodiment is $l=1,..., 4$ ;

$$W_{8,l,4i+j} = \begin{pmatrix} W_{4,l,i} \\ W_{4,l,j} \end{pmatrix}, \text{ where } i = 0,..., K\text{-}1 \text{ and } j = 0,..., K\text{-}1 \quad (2)$$

As can be apparent, a matrix resulting from full combination of two $4 \times l$ matrixes will be a $8 \times l$ matrix.

When the number of data streams required in a system is below or equals to 4, then an eight-antenna feedback codebook can be composed of a four-antenna feedback codebook more conveniently by the method according to the second embodiment.

The difference between the first embodiment and the second embodiment lies in that the solution according to the second embodiment can be adopted directly if a system does not support more than four data streams or it is more advantageous to adopt the solution according to the first embodiment if the system requires the network device to support more than four data streams.

Furthermore taking an LTE system as an example, an eight-antenna feedback codebook for data streams being below or equal to four may be generated in the manner according to the first embodiment only if codewords in $W_{4,4}$ are embeddable. Being embeddable refers to that for a $4 \times m$ matrix $W_{4,m,i}$ and a $4 \times n$ matrix $W_{4,n,j}$, $W_{4,n,j}$ can be represented as $(W_{4,m,j}, X)$ if n is above or equals to m, where the matrix $X$ is a $4 \times (n\text{-}m)$ matrix.

Respective apparatuses according to the invention will be introduced below in connection with block diagrams of the apparatuses, and since these apparatuses have technical features in one-to-one correspondence to the foregoing methods, the respective apparatuses can be understood referring to the introduction of the flows of the methods in the description, and thus the following introduction of the apparatuses will be simplified. However those skilled in the art can appreciate that this simplification will not influence full disclosure of the invention.

Fig.4 is a block diagram of a first apparatus for generating an eight-antenna feedback codebook for $l$ data streams in a network device according to an embodiment of the invention, where $l=1,...,8$.

The first apparatus as illustrated in Fig.4 includes a first unit 41 for acquiring a four-antenna feedback codebook $W_{4,4}$ for four data streams, where the $i^{\text{th}}$ codeword is denoted as $W_{4,4,i}$, where $i=0,...,K\text{-}1$. The function of the first unit 41 corresponds to the step S21 in Fig.2.

The first apparatus 4 further includes a second unit 42 for generating an eight-antenna feedback codebook for eight data streams based upon the four-antenna feedback codebook $W_{4,4}$ for the four data streams, where the $(4i+j)^{\text{th}}$ codeword is defined in the equation (3) of:

$$W_{8,8,4i+j} = \begin{pmatrix} W_{4,4,i} & W_{4,4,i} \\ W_{4,4,j} & -W_{4,4,j} \end{pmatrix}, \text{ where } i = 0,...,K\text{-}1 \text{ and } j = 0,...,K\text{-}1 \quad (3)$$

The function of the second unit 42 corresponds to the step S22 and the step S23 in Fig.2.

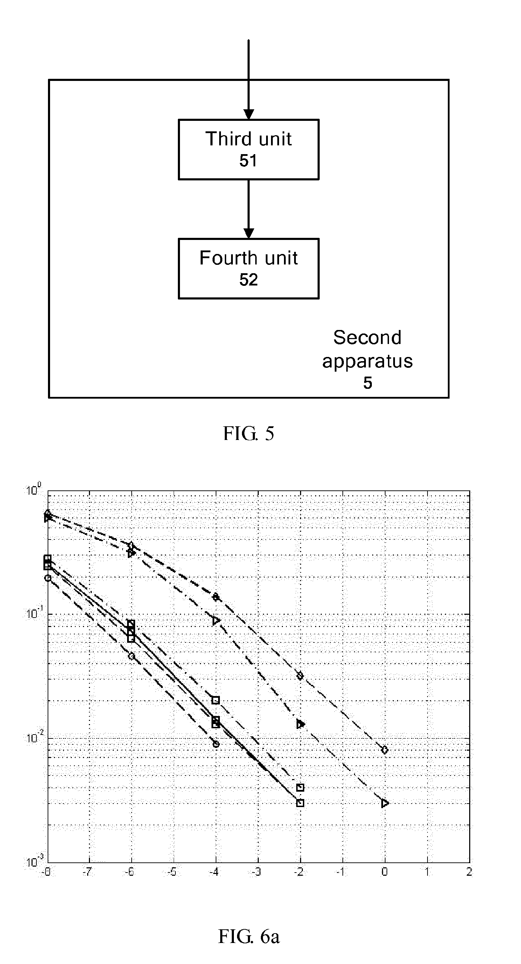

Fig.5 is a block diagram of a second apparatus for generating an eight-antenna feedback codebook for $l$ data streams in a network device according to another embodiment of the invention, where $l=1,...,4$.

The second apparatus 5 as illustrated in Fig.5 includes a third unit 51 and a fourth unit 52, wherein the third unit 51 corresponds to the step S31 in Fig.3 and is used for acquiring a four-antenna feedback codebook $W_{4,l}$ for $l$ data streams, where the $i^{\text{th}}$ codeword is denoted as $W_{4,l,i}$, where $i=0,...,K\text{-}1$ and $K$ represents the number of codewords in $W_{4,l}$.

The fourth unit 52 corresponds to the step S32 in Fig.3 and is used for generating an eight-antenna feedback codebook $W_{8,l}$ for $l$ data streams based upon the four-antenna feedback codebook $W_{4,l}$ for the $l$ data streams, where the $(4i+j)^{\text{th}}$ codeword is defined in the equation (4) of:

$$W_{8,l,4i+j} = \begin{pmatrix} W_{4,l,i} \\ W_{4,l,j} \end{pmatrix}, \text{ where } i = 0,...,K\text{-}1 \text{ and } j = 0,...,K\text{-}1 \quad (4)$$

With the methods and the apparatuses described above, good system performance can be achieved in the respective embodiments of the invention, and simulation results are as depicted in Table 1 and Fig.6a to Fig.6f.

# Table 1: Simulation results of Signal to Noise Ratio (SNR) with Block Error Ratio (BLER) of 0.1

| | Inventive 8-bit scheme in LTE Release 8 | Inventive 6-bit scheme in LTE Release 8 | Inventive 4-bit scheme in LTE Release 8 | Existing 4-bit scheme in LTE Release 8 |
|---|---|---|---|---|
| Number of data streams=1, UMi corresponds to Fig.6a | -6.7 dB | -6.6 dB | -6.3 dB | -4.2 dB |
| Number of data streams=1, UMa corresponds to Fig.6b | -6.7 dB | -6.5 dB | -6.3 dB | -4.2 dB |
| Number of data streams=2, UMi corresponds to Fig.6c | 1 dB | 1.4 dB | 2.3 dB | 4.5 dB |
| Number of data streams=2, UMa corresponds to Fig.6d | 2 dB | 2 dB | 2.8 dB | 5.4 dB |
| Number of data streams=4, UMi corresponds to Fig.6e | 5.5 dB | 5.5 dB | 6 dB | 8.4 dB |
| Number of data streams=4, UMa corresponds to Fig.6f | 6.5 dB | 6.5 dB | 6.8 dB | 9.8 dB |

Fig.6a to Fig.6f illustrate a relationship between the block error ratio and the signal to noise ratio in the different simulated schemes, where the vertical axis represents the block error ratio and the horizontal axis represents the signal to noise ratio, and some parameters used in the simulation process are as depicted in Table 2:

Table 2: Values of respective parameters in simulation process

| Parameters | Values |
|---|---|
| Transmission scheme | Beam shaping with single data stream, two data streams and four data streams Uni-user MIMO |
| Number of base stations and antenna configuration | Eight atennas per base station and spaced by half wavelength |

(continued)

| Parameters | Values |
|---|---|
| Number of mobile terminals and antenna configuration | Two or four atennas per mobile terminal and spaced by half wavelength |
| Modulation scheme | QPSK |
| Channel coding | 1/2 Turbo coding |
| CSI feedback delay | 0 ms |
| Antenna correlation report peoridicity | 0 ms |
| Antenna correlation matrix quantization scheme | Ideal |
| Radio resource for transmission | 5 LTE PRBs in frequeny domain |
| Channel estimation | Ideal |
| Data detection | MMSE |
| Velocity of mobile terminal | 3 kilometers per hour or 30 kilometers per hour |
| Fast fading channel model | ITU channel model in UMi or UMa |
| Large scale channel model | NLoss |
| Frames simulated | 1000 |
| Block size for BLER | 584 bits |
| Base codebook | Inventive 8, 6 and 4-bit schemes in LTE Release 8 and existing 4-bit scheme in LTE Release 8 |

Different curves in Fig.6a to Fig.6f mean the following:

A dotted curve with boxes represents the inventive 8-bit scheme with eight antennas in LTE Release 8; a solid curve with boxes represents the inventive 6-bit scheme with eight antennas in LTE Release 8; a dotted and dashed curve with boxes represents the inventive 4-bit scheme with eight antennas in LTE Release 8; a dotted and dashed curve with triangles represents the existing 4-bit scheme with eight antennas in LTE Release 8; a dotted curve with circles represents ideal eight-antenna SVD; and a dotted curve with diamonds represents ideal four-antenna SVD.

A simulation environment in Fig.6a involves ITU-UMi, the velocity of a mobile terminal with two receiving antennas being 3km/h, 1/2 Turbo coding, QPSK modulation and the number of data streams being one.

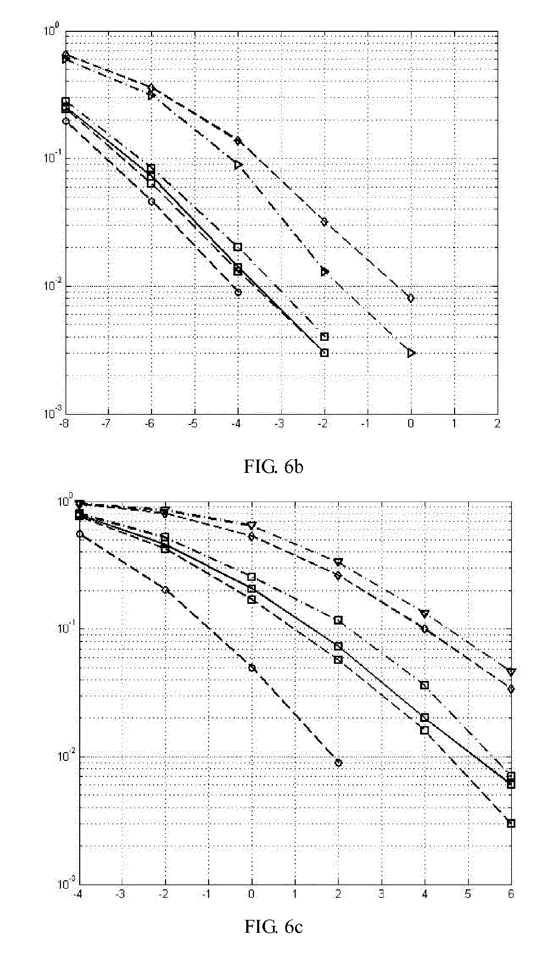

A simulation environment in Fig.6b involves ITU-UMa, the velocity of a mobile terminal with two receiving antennas being 30km/h, 1/2 Turbo coding, QPSK modulation and the number of data streams being one.

A simulation environment in Fig.6c involves ITU-UMi, the velocity of a mobile terminal with two receiving antennas being 3km/h, 1/2 Turbo coding, QPSK modulation and the number of data streams being two.

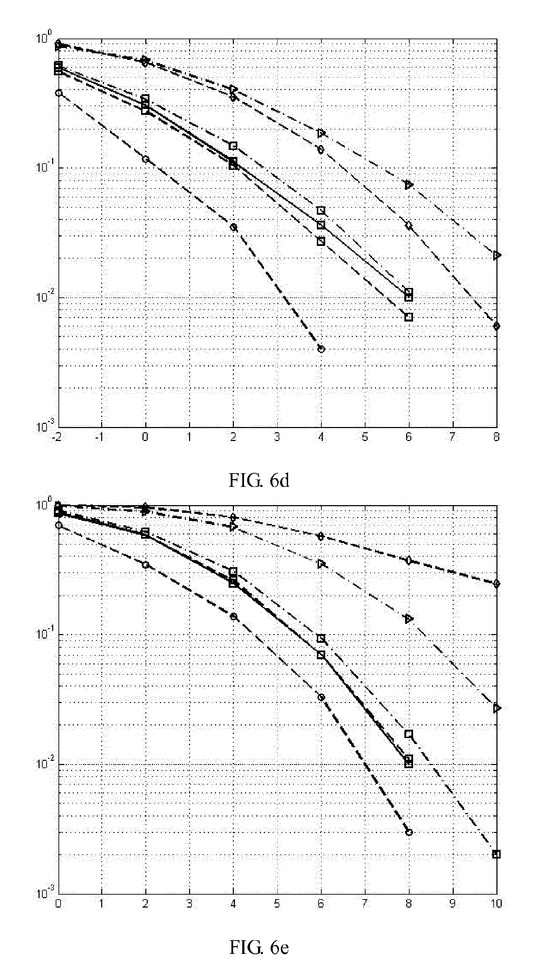

A simulation environment in Fig.6d involves ITU-UMa, the velocity of a mobile terminal with two receiving antennas being 30km/h, 1/2 Turbo coding, QPSK modulation and the number of data streams being two.

A simulation environment in Fig.6e involves ITU-UMi, the velocity of a mobile terminal with four receiving antennas being 3km/h, 1/2 Turbo coding, QPSK modulation and the number of data streams being four.

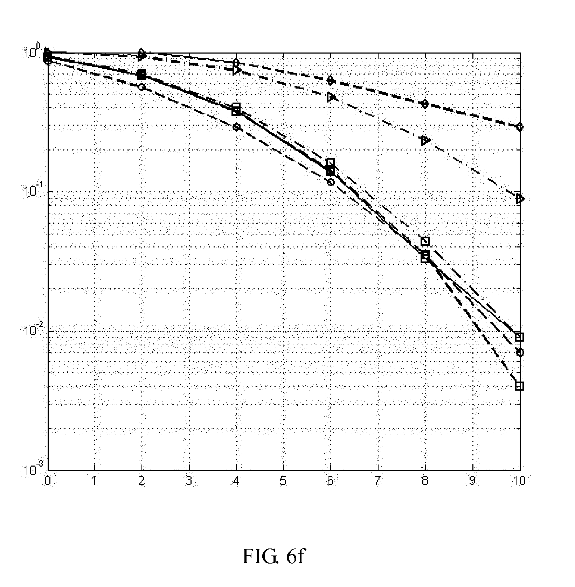

A simulation environment in Fig.6f involves ITU-UMa, the velocity of a mobile terminal with four receiving antennas being 30km/h, 1/2 Turbo coding, QPSK modulation and the number of data streams being four.

The embodiments of the invention have been described above. It shall be appreciated that the invention will not be limited to the foregoing embodiments and those skilled in the art can make various variations or modifications without departing the scope of the appended claims.

**Claims**

1. A method of generating a 2M-antenna feedback codebook for $l$ data streams in a network device, wherein $l=1,...,2M$, and the method comprises the steps of:

acquiring an M-antenna feedback codebook $W_{M,M}$ for M data streams, wherein the $i^{th}$ codeword is denoted as $W_{M,M,i}$, wherein $i=0,...,K-1$, and K is the number of codewords in $W_{M,M}$;

generating a 2M-antenna feedback codebook for 2M data streams based upon the M-antenna feedback codebook for the M data streams, wherein the $(4i+j)^{\text{th}}$ codeword is defined in the equation of:

$$W_{2M,2M,4i+j} = \begin{pmatrix} W_{M,M,i} & W_{M,M,i} \\ W_{M,M,j} & -W_{M,M,j} \end{pmatrix}, \quad \text{wherein } i=0,...,\ K\text{-1, and } j=0,...,\ K\text{-1; and}$$

determining a 2M-antenna feedback codebook for $l$ data streams according to the generated 2M-antenna feedback codebook for the 2M data streams, wherein the $(4i+j)^{\text{th}}$ codeword $W_{2M,1,4i+j}$ is composed of the first $l$ columns of $W_{2M,2M,4i+j}$.

2. The method according to claim 1, wherein the codewords in the M-antenna feedback codebook $W_{M,M}$ are embeddable.

3. The method according to claim 1 or 2, wherein M equals to 4.

4. A method of generating a 2M-antenna feedback codebook for $l$ data streams in a network device, wherein $l=1,...,$ $M$, and the method comprises the steps of:

acquiring an M-antenna feedback codebook $W_{M,l}$ for $l$ data streams, wherein the $i^{\text{th}}$ codeword is denoted as $W_{M,l,i}$, wherein $i= 0,...,\ K$-1, and $K$ is the number of codewords in $W_{M,l}$; and
generating a 2M-antenna feedback codebook for the $l$ data streams based upon the M-antenna feedback codebook for the $l$ data streams, wherein the $(4i+j)^{\text{th}}$ codeword is defined in the equation of:

$$W_{2M,l,4i+j} = \begin{pmatrix} W_{M,l,i} \\ W_{M,l,j} \end{pmatrix}, \quad \text{wherein } i=0,...,K\text{-1, and } j=0,...,K\text{-1.}$$

5. The method according to claim 4, wherein M equals to 4.

6. A first apparatus for generating a 2M-antenna feedback codebook for $l$ data streams in a network device, wherein $l=1,...,\ 2M$, and the first apparatus comprises:

a first unit for acquiring an M-antenna feedback codebook $W_{M,M}$ for M data streams, wherein the $i^{\text{th}}$ codeword is denoted as $W_{M,M,i}$, wherein $i=0,...,\ K$-1, and $K$ is the number of codewords in $W_{M,M}$; and
a second unit for generating a 2M-antenna feedback codebook for 2M data streams based upon the M-antenna feedback codebook for the M data streams, wherein the $(4i+j)^{\text{th}}$ codeword is defined in the equation of:

$$W_{2M,2M,4i+j} = \begin{pmatrix} W_{M,M,i} & W_{M,M,i} \\ W_{M,M,j} & -W_{M,M,j} \end{pmatrix}, \quad \text{wherein } i=0,...,\ K\text{-1, and } j=0,...,\ K\text{-1; and}$$

the second unit is further for determining a 2M-antenna feedback codebook for $l$ data streams according to the generated 2M-antenna feedback codebook for the 2M data streams, wherein the $(4i+j)^{\text{th}}$ codeword $W_{2M,1,4i+j}$ is composed of the first $l$ columns of $W_{2M,2M,4i+j}$.

7. The first apparatus according to claim 6, wherein the codewords in the M-antenna feedback codebook $W_{M,M}$ are embeddable.

8. The first apparatus according to claim 6 or 7, wherein M equals to 4.

9. A second apparatus for generating a 2M-antenna feedback codebook of $l$ data streams in a network device, wherein *l*=1,..., *M*, and the second apparatus comprises the steps of:

a third unit for acquiring an M-antenna feedback codebook $W_{M,l}$ for *l* data streams, wherein the ith codeword is denoted as $W_{M,l,i}$, wherein *i*=0,..., *K*-1, *and K* is the number of codewords in $W_{M,l}$; and
a fourth unit for generating a 2M-antenna feedback codebook for the *l* data streams based upon the M-antenna feedback codebook for the *l* data streams, wherein the (4*i*+*j*)[th] codeword is defined in the equation of:

$$W_{2M,l,4i+j} = \begin{pmatrix} W_{M,l,i} \\ W_{M,l,j} \end{pmatrix},$$ wherein *i*=0,..., *K*-1, and *j* =0,..., *K*-1.

**10.** The second apparatus according to claim 9, wherein M equals to 4.

Transmitter

Transmitting antenna 1

MIMO channel

Receiver

$X_1$

Pre-coding matrix

Transmitting Antenna M

MIMO decoding

$X_M$

FIG. 1

S21

Acquire a four-antenna feedback codebook for four data streams

S22

Generate an eight-antenna feedback codebook for eight data streams based upon the M-antenna feedback codebook for the four data streams

S23

Determine an eight-antenna feedback codebook for *l* data streams according to the generated eight-antenna feedback codebook for the 2M data streams

FIG. 2

Acquire a four-antenna feedback
codebook for *l* data streams

S3
1

Generate an eight-antenna
feedback codebook for the *l* data
streams based upon the four-
antenna feedback codebook for
the *l* data streams

S3
2

FIG. 3

First unit
41

Second unit
42

First
apparatus
4

FIG. 4

FIG. 5

FIG. 6a

FIG. 6b

FIG. 6c

FIG. 6d

FIG. 6e

FIG. 6f

| INTERNATIONAL SEARCH REPORT | International application No. |
|---|---|
| | PCT/CN2010/070151 |

**A. CLASSIFICATION OF SUBJECT MATTER**

H04B7/04(2006.01)i

According to International Patent Classification (IPC) or to both national classification and IPC

**B. FIELDS SEARCHED**

Minimum documentation searched (classification system followed by classification symbols)

IPC: H04B7/-

Documentation searched other than minimum documentation to the extent that such documents are included in the fields searched

Electronic data base consulted during the international search (name of data base and, where practicable, search terms used)

WPI; EPODOC; CPRS; CNKI: codebook feedback antenna codeword generate matrix row combine

**C. DOCUMENTS CONSIDERED TO BE RELEVANT**

| Category* | Citation of document, with indication, where appropriate, of the relevant passages | Relevant to claim No. |
|---|---|---|
| A | CN101330479A (ZTE COMMUNICATION CO LTD) 24 Dec. 2008 (24.12.2008) The page 1 line 21 – page 7 line 12 of the description | 1-10 |
| A | CN101340219A (HUAWEI TECHNOLOGY CO LTD) 07 Jan. 2009 (07.01.2009) The whole description | 1-10 |
| A | CN101127582A (UNIV BEIJING POST&TELECOM) 20 Feb. 2008 (20.02.2008) The whole description | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 20 Sep. 2010(20.09.2010) | 21 Oct. 2010 (21.10.2010) |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LING, Lin Telephone No. (86-10)62411401 |

Form PCT/ISA /210 (second sheet) (July 2009)

**INTERNATIONAL SEARCH REPORT**
Information on patent family members

| | | International application No. |
|---|---|---|
| | | PCT/CN2010/070151 |

| Patent Documents referred in the Report | Publication Date | Patent Family | Publication Date |
|---|---|---|---|
| CN101330479A | 24.12.2008 | NONE | |
| CN101340219A | 07.01.2009 | WO2009003423A1 | 08.01.2009 |
| CN101127582A | 20.02.2008 | NONE | |

Form PCT/ISA /210 (patent family annex) (July 2009)